(19) Europäisches Patentamt / European Patent Office / Office européen des brevets

(11) EP 3 148 193 B1

(12) **EUROPEAN PATENT SPECIFICATION**

(45) Date of publication and mention of the grant of the patent:
**16.09.2020 Bulletin 2020/38**

(21) Application number: **16195152.0**

(22) Date of filing: **07.06.2005**

(51) Int Cl.:
*H04N 19/176* (2014.01)
*H04N 19/513* (2014.01)
*H04N 19/593* (2014.01)
*H04N 19/91* (2014.01)
*H04N 19/182* (2014.01)
*H04N 19/46* (2014.01)
*H04N 19/61* (2014.01)
*H04N 19/11* (2014.01)
*H04N 19/146* (2014.01)
*H04N 19/44* (2014.01)

(54) **METHOD AND APPARATUS FOR LOSSLESS VIDEO DECODING**

VERFAHREN UND VORRICHTUNG ZUR VERLUSTFREIEN VIDEODECODIERUNG

PROCÉDÉ ET APPAREIL DE DÉCODAGE VIDÉO SANS PERTE

(84) Designated Contracting States:
**AT BE BG CH CY CZ DE DK EE ES FI FR GB GR HU IE IS IT LI LT LU MC NL PL PT RO SE SI SK TR**

(30) Priority: **07.06.2004 KR 20040041399**
**26.07.2004 KR 20040058349**

(43) Date of publication of application:
**29.03.2017 Bulletin 2017/13**

(62) Document number(s) of the earlier application(s) in accordance with Art. 76 EPC:
**05750742.8 / 1 757 106**

(73) Proprietors:
- **Sejong Industry-Academy Cooperation Foundation**
  **Seoul 138-743 (KR)**
- **Samsung Electronics Co., Ltd.**
  **Gyeonggi-do 16677 (KR)**

(72) Inventors:
- **LEE, Yung-Lyul**
  **Seoul (KR)**
- **HAN, Ki-Hoon**
  **Seoul (KR)**
- **LEE, Yung-Ki**
  **Seoul (KR)**

(74) Representative: **Appleyard Lees IP LLP**
**15 Clare Road**
**Halifax HX1 2HY (GB)**

(56) References cited:
- **SUN: "Lossless Coding and QP Range Selection", 3. JVT MEETING; 60. MPEG MEETING; 06-05-2002 - 10-05-2002; FAIRFAX,US; (JOINT VIDEO TEAM OF ISO/IEC JTC1/SC29/WG11 AND ITU-T SG.16 ),, no. JVT-C023r1-L, 10 May 2002 (2002-05-10) , XP030005129, ISSN: 0000-0442**
- **CHANG S G ET AL: "A simple block-based lossless image compression scheme", SIGNALS, SYSTEMS AND COMPUTERS, 1996. CONFERENCE RECORD OF THE THIRTIE TH ASILOMAR CONFERENCE ON PACIFIC GROVE, CA, USA 3-6 NOV. 1996, LOS ALAMITOS, CA, USA,IEEE COMPUT. SOC, US, vol. 1, 3 November 1996 (1996-11-03), pages 591-595, XP010231497, DOI: 10.1109/ACSSC.1996.601093 ISBN: 978-0-8186-7646-8**
- **LEE: "Lossless coding for FRExt", 12. JVT MEETING; 69. MPEG MEETING; 17-07-2004 - 23-07-2004; REDMOND,US; (JOINT VIDEO TEAM OF ISO/IEC JTC1/SC29/WG11 AND ITU-T SG.16 ),, no. JVT-L017r1, 23 July 2004 (2004-07-23), XP030005872, ISSN: 0000-0420**
- **WIEGAND T ET AL: "Overview of the H.264/AVC video coding standard", IEEE TRANSACTIONS ON CIRCUITS AND SYSTEMS FOR VIDEO TECHNOLOGY, IEEE SERVICE CENTER, PISCATAWAY, NJ, US, vol. 13, no. 7, 1 July 2003 (2003-07-01), pages 560-576, XP011221093, ISSN: 1051-8215, DOI: 10.1109/TCSVT.2003.815165**
- **DROST G W ET AL: "A hybrid system for real-time lossless image compression", MICROPROCESSORS AND MICROSYSTEMS, IPC BUSINESS PRESS LTD. LONDON, GB, vol. 25, no. 1, 15 March 2001 (2001-03-15) , pages 19-31, XP004317581, ISSN: 0141-9331, DOI: 10.1016/S0141-9331(00)00102-2**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- KIM: "Prop.(PExt) Color format extension", 8. JVT MEETING; 23-05-2003 - 27-05-2003; GENEVA, CH; (JOINT VIDEO TEAMOF ISO/IEC JTC1/SC29/WG11 AND ITU-T SG.16 ),, no. JVT-H018, 27 May 2003 (2003-05-27), XP030005722, ISSN: 0000-0426

## Description

### Technical Field

Apparatuses and methods consistent with the present invention relate to encoding and decoding of moving picture data, and more particularly, to a lossless moving picture encoding and decoding by which when intra prediction is performed for a block of a predetermined size, by using a pixel in the block to be predicted, a compression ratio is increased.

### Background Art

According to the H.264 standard set up for encoding and decoding moving picture data, a frame includes a plurality of macroblocks, and encoding and decoding are performed in units of macroblocks, or in units of sub blocks which arc obtained by dividing a macroblock into two or four units. There are two methods of predicting the motion of a macroblock of a current frame to be encoded: temporal prediction which draws reference from macroblocks of an adjacent frame, and spatial prediction which draws reference from an adjacent macroblock.
Spatial prediction is also referred to as intra prediction. Intra prediction is based on the characteristic that when a pixel is predicted, an adjacent pixel is most likely to have a most similar value.
Meanwhile, encoding can be broken down into lossy encoding and lossless encoding. In order to perform lossless encoding of moving pictures, a predicted pixel value calculated by motion prediction is subtracted from a current pixel value. Then, without discrete cosine transform (DCT) or quantization, entropy coding is performed and the result is output.

Prior art document:

SUN: "Lossless Coding and QP Range Selection", 3. JVT MEETING; 60. MPEG MEETING; 06-10 May 2002; FAIRFAX,US; (JOINT VIDEO TEAM OF ISO/IEC JTC1/SC29/WG11 AND ITU-T SG.16), no. JVT-C023r1-L, 10 May 2002,
discloses a lossless video coding technique building upon H.264.
Prior art document:
CHANG S G ET AL: "A simple block-based lossless image compression scheme", CONFERENCE RECORD OF THE THIRTIETH ASILOMAR CONFERENCE ON SIGNALS, SYSTEMS AND COMPUTERS, PACIFIC GROVE, CA, USA 3-6 NOV. 1996, LOS ALAMITOS, CA, USA,IEEE COMPUT. SOC, US, Vol. 1, 3 November 1996, pages 591-595,
discloses a lossless image compression scheme with spatial prediction on a pixel-by-pixel basis (i.e. from an adjacent pixel). Such a scheme is, however, not compatible with block based coding techniques such as H.264.

### Disclosure of Invention

### Technical Problem

In the conventional method, when lossless encoding is performed, each pixel value in a block to be predicted is predicted by using a pixel value of a block adjacent to the block to be predicted, and therefore the compression ratio is much lower than that of lossy encoding.

### Technical Solution

The present invention provides a lossless moving picture decoding method and apparatus by which when intra prediction of a block with a predetermined size is performed, the compression ratio is increased by using a pixel in a block to be predicted.
The scope of the invention is defined by the appended claims which are addressed to a method and an apparatus for decoding a video signal as defined in independent claims 1 and 3.
Such an apparatus is disclosed, in particular, in figure 6 and in the corresponding part of the description.
The description provides also teaching relative to a corresponding encoding method and apparatus. Such a teaching is to be considered as part of the invention only insofar as it illustrates how the claimed decoding method and apparatus work. An encoding method and apparatus, as such, are not claimed and are, therefore, not part of the invention.
According to an aspect of the present invention, there is provided a method for decoding a video signal according to independent claim 1. Said method is a lossless moving picture decoding method which includes inter alia or, optionally, further includes: receiving a bitstream obtained by performing entropy coding based on prediction values, each predicted by using a closest pixel in a prediction direction determined according to an encoding mode, in an M x N block which is a prediction block unit; entropy decoding the bitstream; and losslessly restoring an original image according to the decoded values.

According to another aspect of the present invention, there is provided an apparatus for decoding a video signal according to independent claim 3. Said apparatus is a lossless moving picture decoding apparatus which includes inter alia or further, optionally, includes: an entropy decoding unit which receives a bitstream obtained by performing entropy coding based on values predicted by using a closest pixel in a prediction direction determined according to an encoding mode, in an M x N block which is a prediction block unit, and performs entropy decoding on the bitstream; and a moving picture restoration unit which losslessly restores an original image according to the decoded values.

## Advantageous Effects

The compression ratio can be improved when lossless encoding is performed. In particular, when only intra prediction mode is used, the compression ratio is much higher than in the conventional method.

## Description of Drawings

FIG. 1 is a block diagram of an encoding apparatus according to an exemplary embodiment of the present invention;
FIG. 2 is a diagram showing intra prediction modes for a 4 x 4 block in H.264;
FIG. 3A illustrates pixel prediction of a luminance block and a G block in Vertical mode (mode 0);
FIG. 3B illustrates pixel prediction of a luminance block and a G block in Horizontal mode (mode 1);
FIG. 3C illustrates pixel prediction of a luminance block and a G block in Diagonal_Down_Left mode (mode 3);
FIG. 3D illustrates pixel prediction of a luminance block and a G block in Diagonal Down_Right mode (mode 4);
FIG. 3E illustrates pixel prediction of a luminance block and a G block in Vertical_Right mode (mode 5);
FIG. 3F illustrates pixel prediction of a luminance block and a G block in Horizontal_Down mode (mode 6);
FIG. 3G illustrates pixel prediction of a luminance block and a G block in Vertical_Left mode (mode 7);
FIG. 3H illustrates pixel prediction of a luminance block and a G block in Horizontal_Up mode (mode 8);
FIG. 4A illustrates pixel prediction of a chrominance block, an R block, and a B block in DC mode;
FIG. 4B illustrates pixel prediction of a chrominance block, an R block, and a B block in Horizontal mode;
FIG. 4C illustrates pixel prediction of a chrominance block, an R block, and a B block in Vertical mode;
FIG. 5 illustrates a prediction method when encoding and decoding are performed in the above modes; and
FIG. 6 is a block diagram of a decoding apparatus according to an exemplary embodiment of the present invention; and
FIG. 7 is a flowchart of an encoding method according to the present invention.

## Best Mode

In order to explain exemplary embodiments of the present invention, first, defining a prediction value and a residual value will now be explained.

Assuming that the position of a pixel on the top left corner is x=0, y=0, p[x, y] indicates a pixel value on a relative position (x, y). For example, in FIG. 3A, the position of pixel a is expressed as [0, 0], the position of pixel b is as [1, 0], the position of pixel c is as [2, 0], the position of pixel d is as [3, 0], and the position of pixel e is as [0, 1]. The positions of the remaining pixels f through p can be expressed in the same manner.

A prediction value when a pixel is predicted by the original H.264 method without modifying the prediction method is expressed as $pred_L[x, y]$. For example, the prediction value of pixel a in FIG. 3A is expressed as $pred_L[0, 0]$. In the same manner, the prediction value of pixel b is $pred_L[1, 0]$, the prediction value of pixel c is $pred_L[2, 0]$, the prediction value of pixel d is $pred_L[3, 0]$, and the prediction value of pixel e is $pred_L[0, 1]$. The prediction values of the remaining pixels f through p can be expressed in the same manner.

A prediction value when a pixel is predicted from adjacent pixels according to the present invention is expressed as $pred_L[x, y]$. The position of a pixel is expressed in the same manner as in $pred_L[x, y]$. The residual value of position (i, j) obtained by subtracting the pixel prediction value at position (i, j) from the pixel value at position (i, j) is expressed as $r_{i,j}$. The pixel value of position (i, j) restored by adding the pixel prediction value at position (i, j) and the residual value at position (i, j) when decoding is performed, is expressed as $u_{i,j}$.

The present invention will now be described more fully with reference to the accompanying drawings, in which exemplary embodiments of the invention are shown.

Referring to FIG. 1 showing an encoding apparatus according to an exemplary embodiment of the present invention, if an image is input, motion prediction is performed. In the present invention, pixels of a luminance block and a G block are obtained by performing 4 x 4 intra prediction and pixels of a chrominance block, an R block, and a B block are obtained by performing 8 x 8 intra prediction. Accordingly, a motion prediction unit 110 performs 4 x 4 intra prediction for pixels of a luminance block and a G block in a macroblock to be predicted and 8 x 8 intra prediction for pixels of a chrominance block, an R block, and a B block. Calculation of predicted pixel values when 4 x 4 intra prediction and 8 x 8 intra prediction are performed will be explained later. A mode selection unit 120 selects one optimum mode among a variety of prediction modes. That is, when 4 x 4 intra prediction and 8 x 8 intra prediction are performed, one mode is selected from among a plurality of available encoding modes. Generally, one mode is selected according to a rate-distortion (RD) optimization method which minimizes rate-distortion. Since there is no distortion in the lossless encoding of the present invention, one encoding mode is determined through optimization of rates.

An entropy coding unit 130 entropy-codes a difference value output from the motion prediction unit 110, that is, the difference between a pixel value in a macroblock of a current frame desired to be encoded and a predicted pixel value, and outputs the result. Entropy coding means a coding method by which less bits are assigned to more frequent data and more bits are assigned to less frequent data such that the compression ratio of data is increased. The entropy coding methods used in the present invention include context adaptive variable length coding (CAVLC), and context-based adaptive binary arithmetic coding (CABAC).

**Mode for Invention**

FIG. 2 is a diagram showing intra prediction modes for a 4 x 4 block in H.264.

Intra prediction of pixels in a luminance block and a G block is performed in units of 4 x 4 blocks. There are nine types of 4 x 4 intra prediction modes corresponding to different prediction directions, including: Vertical mode (mode 0), Horizontal mode (mode 1), DC mode (mode 2), Diagonal_Down_Left (mode 3), Diagonal_Down_Right (mode 4), Vertical_Right (mode 5), Horizontal_Down (mode 6), Vertical_Left (mode 7), and Horizontal_Up (mode 8). The arrows in FIG. 2 indicate prediction directions. Calculation of a pixel in each mode will now be explained in more detail.

FIG. 3A illustrates pixel prediction of a luminance block and a G block in Vertical mode (mode 0).

Pixel a 302 is predicted from pixel A, which is an adjacent pixel in the vertical direction, and pixel e 304 is predicted not from pixel A adjacent to the block 300 to be predicted but from pixel a 302 which is adjacent to pixel e 304 in the block 300. Also, pixel i 306 is predicted from pixel e 304 and pixel m 308 is predicted from pixel i 306.

In the same manner, pixel b is predicted from pixel B, pixel f from pixel b, pixel j from pixel f, pixel n from pixel j, pixel c from pixel C, pixel g from pixel c, pixel k from pixel g, pixel o from pixel k, pixel d from pixel D, pixel h from pixel d, pixel 1 from pixel h, and pixel p from pixel 1. Here, prediction means to output the difference (residual value) of pixel values and to entropy code the difference. That is, for pixels a, e, i, and m in the block 300 to be predicted, residual values (a - A), (e - a), (i - e), and (m - i), are output and entropy coded, respectively. The pixel prediction method in V ertical mode (mode 0) can be expressed as the following equation:

$$pred4x4_{L'}[x,y] = p[x-1,y], \quad x, y = 0, \ldots, 3$$

FIG. 3B illustrates pixel prediction of a luminance block and a G block in Horizontal mode (mode 1).

Pixel a 312 is predicted from pixel I, which is an adjacent pixel in the horizontal direction, and pixel b 314 is predicted not from pixel I adjacent to the block 300 to be predicted but from pixel a 312 which is adjacent to pixel b 314 in the block 300. Also, pixel c 316 is predicted from pixel b 314 and pixel d 318 is predicted from pixel c 316.

In the same manner, pixel e is predicted from pixel J, pixel f from pixel e, pixel g from pixel f, pixel h from pixel g, pixel i from pixel K, pixel j from pixel i, pixel k from pixel j, pixel 1 from pixel k, pixel m from pixel L, pixel n from pixel m, pixel o from pixel n, and pixel p from pixel o. The pixel prediction method in Horizontal mode (mode 1) can be expressed as the following equation:

$$pred4x4_{L'}[x,y] = p[x-1,y], \quad x, y = 0, \ldots, 3$$

FIG. 3C illustrates pixel prediction of a luminance block and a G block in Diagonal_Down_Left mode (mode 3).

Pixel a 322 is predicted from pixel B that is an adjacent pixel in the diagonal direction indicated by an arrow in FIG. 3C, and pixel e 324 is predicted from pixel b that is a pixel adjacent to pixel e 324 in the arrow direction in the block 300. Also, pixel i 326 is predicted from pixel f and pixel m 328 is predicted from pixel j.

In this manner, pixel b is predicted from pixel C, pixel c from pixel D, pixel d from pixel E, pixel f from pixel c, pixel g from pixel d, pixel h from pixel d, pixel j from pixel g, pixel k from pixel h, pixel 1 from pixel h, pixel n is from pixel k, pixel o from pixel 1, and pixel p from pixel 1. The pixel prediction method in Diagonal_Down_Left mode (mode 3) can be expressed as the following equation:

$$\text{if } x=3,\ y\neq 0,\ pred_{L'}[x,y] = p[x1,y-1],$$

$$\text{else},\quad pred_{L'}[x,y] = p[x+1,y-1]$$

Also, when a pixel is predicted in Diagonal_Down_Left mode (mode 3), prediction can be performed by using an appropriate filter for pixels in prediction directions. For example, when 1:2:1 filter is used, pixel a 322 is predicted from (A + 2B + C + 2)/4 which is formed using pixel values located in the diagonal direction indicated by arrows in FIG. 3C, and pixel e 324 is predicted from (a + 2b + c + 2)/4 which is formed using pixel values located adjacent to pixel e 324 in the diagonal direction in the block 300. Also, pixel i 326 is predicted from (e + 2f + g + 2)/4 and pixel m 328 is predicted from (i + 2j + k + 2)/4.

In the same manner, pixel b is predicted from (B + 2C + D + 2), pixel c from (C + 2D + E + 2)/4, pixel d from (D + 2E + F + 2)/4, pixel f from (b + 2c + d + 2)/4, pixel g from (c + 2d + d + 2) / 4, pixel h from (d + 2d + d + 2) / 4, pixel j from (f + 2g + h + 2) / 4, pixel k from (g + 2h + h + 2) / 4, pixel 1 from (h + 2h + h + 2) / 4, pixel n from (j + 2k + 1 + 2) / 4, pixel o from (k + 21 + 1 + 2) / 4, and pixel p from (1 + 21 + 1 + 2) / 4.

FIG. 3D illustrates pixel prediction of a luminance block and a G block in Diagonal_Down_Right mode (mode 4).

Pixel a 322 is predicted from pixel X that is an adjacent pixel in the diagonal direction indicated by an arrow in FIG. 3D, and pixel f 334 is predicted from pixel a that is a pixel adjacent to pixel f 334 in the arrow direction in the block 300. Also, pixel k 336 is predicted from pixel f and pixel p 338 is predicted from pixel k.

In this manner, pixel b predicted from pixel A, pixel c from pixel B, pixel d from pixel C, pixel e from pixel I, pixel g from pixel b, pixel h from pixel c, pixel i from pixel J, pixel j from pixel e, pixel 1 from pixel g, pixel is from pixel K, pixel n from pixel i, and pixel o from pixel j. The pixel prediction method in Diagonal_Down_Right mode (mode 4) can be expressed as the following equation:

$$pred4x4_{L'}[x,y] = p[x-1,y-1],\quad x, y = 0, \ldots, 3$$

Also, when a pixel is predicted in Diagonal_Down_Right mode (mode 4), prediction can be performed by using an appropriate filter for pixels in prediction directions. For example, when 1:2:1 filter is used, pixel a 332 is predicted from (I + 2X + A + 2)/4 which is formed using pixel values located in the diagonal direction indicated by arrows in FIG. 3D, and pixel f 334 is predicted from (I+2a+b+2)/4 which is formed using pixel values located adjacent to pixel f 334 in the arrow direction in the block 300. Also, pixel k 336 is predicted from (e + 2f + g + 2)/4 and pixel p 338 is predicted from (j + 2k + 1 + 2)/4.

In the same manner, pixel b is predicted from (X + 2A + B + 2)/4, pixel c from (A + 2B + C + 2)/4, pixel d from (B + 2C + D + 2)/4, pixel e from (J + 21 + a + 2)/4, pixel g from (a + 2b + c + 2)/4, pixel h from (b + 2c + d + 2)/4, pixel i from (K + 2J + e + 2)/4, pixel j from (J + 2e + f + 2)/4, pixel 1 from (f + 2g + h + 2)/4, pixel m from (L + 2K + i + 2)/4, pixel n from (K + 2i + j + 2)/4, and pixel o from (i + 2j + k + 2)/4.

FIG. 3E illustrates pixel prediction of a luminance block and a G block in Vertical_Right mode (mode 5).

Pixel a 342 is predicted from (X + A + 1)/2 which is formed using pixel values located in the diagonal direction at an angle of 22.5° from vertical, as indicated by arrows in FIG. 3E, and pixel e 344 is predicted from (I + a +1)/2 which is formed using pixel values located adjacent to pixel e 344 in the arrow direction at an angle of 22.5° from vertical, in the block 300. Also, pixel j 346 is predicted from (e + f + 1)/2 and pixel n 348 is predicted from (i + j +1)/2.

In the same manner, pixel b is predicted from (A + B + 1)/2, pixel c from (B + C + 1)/2, pixel d from (C + D + 1)/2, pixel f from (a + b + 1)/2, pixel g from (b +c + 1)/2, pixel h from (c +d + 1)/2, pixel i from (J + e + 1)/2, pixel k from (f +g + 1)/2, pixel 1 from (g + h + 1)/2, pixel m from (K + i + 1)/2, pixel o from (j + k + 1)/2, and pixel p from (k + 1 + 1)/2. The pixel prediction method in Vertical_Right mode (mode 5) can be expressed as the following equations:

$$pred4x4_{L'}[0,0] = p[-1,-1] + p[0,-1] + 1) >> 1$$

$$pred4x4_{L'}[1,0] = p[0,-1] + p[1,-1] + 1) >> 1$$

$$pred4x4_{L'}[2,0] = p[1,-1] + p[2,-1] + 1) >> 1$$

$$pred4x4_{L'}[3,0] = p[2,-1] + p[3,-1] + 1) >> 1$$

$$pred4x4_{L'}[0,1] = p[-1,0] + p[0,0] + 1) >> 1$$

$$pred4x4_{L'}[1,1] = p[0,0] + p[1,0] + 1) >> 1$$

$$pred4x4_{L'}[2,1] = p[1,0] + p[2,0] + 1) >> 1$$

$$pred4x4_{L'}[3,1] = p[2,0] + p[3,0] + 1) >> 1$$

$$pred4x4_{L'}[0,2] = p[-1,1] + p[0,1] + 1) >> 1$$

$$pred4x4_{L'}[1,2] = p[0,1] + p[1,1] + 1) >> 1$$

$$pred4x4_{L'}[2,2] = p[1,1] + p[2,1] + 1) >> 1$$

$$pred4x4_{L'}[3,2] = p[2,1] + p[3,1] + 1) >> 1$$

$$pred4x4_{L'}[0,3] = p[-1,2] + p[0,2] + 1) >> 1$$

$$pred4x4_{L'}[1,3] = p[0,2] + p[1,2] + 1) >> 1$$

$$pred4x4_{L'}[2,3] = p[1,2] + p[2,2] + 1) >> 1$$

$$pred4x4_{L'}[3,3] = p[2,2] + p[3,2] + 1) >> 1$$

FIG. 3F illustrates pixel prediction of a luminance block and a G block in Horizontal_Down mode (mode 6).

Pixel a 352 is predicted from (X + I + 1)/2 which is formed using pixel values located in the diagonal direction at an angle of 22.5° from horizontal, as indicated by arrows in FIG. 3F, and pixel b 354 is predicted from (A + a + 1)/2 which is formed using pixel values located adjacent to pixel b 354 in the arrow direction at an angle of 22.5° from horizontal, in the block 300. Also, pixel g 356 is predicted from (b + f + 1)/2 and pixel h 358 is predicted from (c + g + 1)/2.

In the same manner, pixel i is predicted from (J + K + 1)/2, pixel m from (K + L + 1)/2, pixel f from (a + e + 1)/2, pixel j from (e + i + 1)/2, pixel n from (i + m + 1)/2, pixel c from (B + b + 1)/2, pixel k from (f + j + 1)/2, pixel o from (j + n + 1)/2, pixel d from (C + c + 1)/2, pixel 1 from (g + k + 1)/2, and pixel p from (k + o + 1)/2. The pixel prediction method in Horizontal_Down mode (mode 6) can be expressed as the following equations:

$$pred4x4_{L'}[0,0] = p[-1,-1] + p[1-,0] + 1) >> 1$$

$$pred4x4_{L'}[0,1] = p[-1,0] + p[-1,1] + 1) >> 1$$

$$pred4x4_{L'}[0,2] = p[-1,1] + p[-1,2] + 1) >> 1$$

$$pred4x4_{L'}[0,3] = p[-1,2] + p[-1,3] + 1) >> 1$$

$$pred4x4_{L'}[1,0] = p[0,-1] + p[0,0] + 1) >> 1$$

$$pred4x4_{L'}[1,1] = p[0,0] + p[0,1] + 1) >> 1$$

$$pred4x4_{L'}[1,2] = p[0,1] + p[0,2] + 1) >> 1$$

$$pred4x4_{L'}[1,3] = p[0,2] + p[0,3] + 1) >> 1$$

$$pred4x4_{L'}[2,0] = p[1,-1] + p[1,0] + 1) >> 1$$

$$pred4x4_{L'}[2,1] = p[1,0] + p[1,1] + 1) >> 1$$

$$pred4x4_{L'}[2,2] = p[1,1] + p[1,2] + 1) >> 1$$

$$pred4x4_{L'}[2,3] = p[1,2] + p[1,3] + 1) >> 1$$

$$pred4x4_{L'}[3,0] = p[2,-1] + p[2,0] + 1) >> 1$$

$$pred4x4_{L'}[3,1] = p[2,0] + p[2,1] + 1) >> 1$$

$$pred4x4_{L'}[3,2] = p[2,1] + p[2,2] + 1) >> 1$$

$$pred4x4_{L'}[3,3] = p[2,2] + p[2,3] + 1) >> 1$$

FIG. 3G illustrates pixel prediction of a luminance block and a G block in Vertical_Left mode (mode 7).

Pixel a 362 is predicted from (A + B + 1)/2 which is formed using pixel values located in the diagonal direction at an angle of 22.5° from vertical, indicated by arrows in FIG. 3G, and pixel e 364 is predicted from (a + b + 1)/2 which is formed using pixel values located adjacent to pixel e 344 in the arrow direction at an angle of 22.5° from vertical, in the block 300. Also, pixel i 366 is predicted from (e + f + 1)/2 and pixel m 368 is predicted from (i + j + 1)/2.

In the same manner, pixel b is predicted from (B + C + 1)/2, pixel c from (C + D + 1)/2, pixel d from (D + E + 1)/2, pixel f from (b + c + 1)/2, pixel g from (c + d + 1)/2 pixel h from d, pixel j from (f + g + 1)/2, pixel k from (g + h + 1)/2, pixel 1 from h, pixel n from (j + k + 1)/2, pixel o from (k + 1 + 1)/2, and pixel p from 1. The pixel prediction method in Vertical_Left mode (mode 7) can be expressed as the following equations:

$$pred4x4_{L'}[0,0] = (p[0,-1] + p[1,-1] + 1) >> 1$$

$$pred4x4_{L'}[1,0] = (p[1,-1] + p[2,-1] + 1) >> 1$$

$$pred4x4_{L'}[2,0] = (p[2,-1] + p[3,-1] + 1) >> 1$$

$$pred4x4_{L'}[3,0] = (p[3,-1] + p[4,-1] + 1) >> 1$$

$$pred4x4_{L'}[0,1] = (p[0,0] + p[1,0] + 1) >> 1$$

$$pred4x4_{L'}[1,1] = (p[1,0] + p[2,0] + 1) >> 1$$

$$pred4x4_{L'}[2,1] = (p[2,0] + p[3,0] + 1) >> 1$$

$$pred4x4_{L'}[3,1] = p[3,0]$$

$$pred4x4_{L'}[0,2] = (p[0,1] + p[1,1] + 1) >> 1$$

$$pred4x4_{L'}[1,2] = (p[1,1] + p[2,1] + 1) >> 1$$

$$pred4x4_{L'}[2,2] = (p[2,1] + p[3,1] + 1) >> 1$$

$$pred4x4_{L'}[3,2] = p[3,1]$$

$$pred4x4_{L'}[0,3] = (p[0,2] + p[1,2] + 1) >> 1$$

$$pred4x4_{L'}[1,3] = (p[1,2] + p[2,2] + 1) >> 1$$

$$pred4x4_{L'}[2,3] = (p[2,2] + p[3,2] + 1) >> 1$$

$$pred4x4_{L'}[3,3] = p[3,2]$$

FIG. 3H illustrates pixel prediction of a luminance block and a G block in Horizontal_Up mode (mode 8).

Pixel a 372 is predicted from (I + J + 1)/2 which is formed using pixel values located in the diagonal direction at an angle of 22.5° from horizontal, as indicated by arrows in FIG. 3H, and pixel b 374 is predicted from (a + e + 1)/2 which is formed using pixel values located adjacent to pixel b 374 in the arrow direction at an angle of 22.5° from horizontal, in the block 300. Also, pixel c 376 is predicted from (b + f + 1)/2 and pixel d 378 is predicted from (c + g + 1)/2.

In the same manner, pixel e is predicted from (J + K + 1)/2, pixel I from (K + L + 1)/2, pixel m from L, pixel f from (e + i + 1)/2, pixel j from (i + m + 1)/2, pixel n from m, pixel g from (f + j + 1)/2, pixel k from (j + n + 1)/2, pixel o from n, pixel h from (g + k + 1)/2, pixel 1 from (k + o + 1)/2, and pixel p from o. The pixel prediction method in Horizontal_Up mode (mode 8) can be expressed as the following equations:

$$pred4x4_{L'}[0,0] = (p[-1,0] + p[-1,1] + 1) >> 1$$

$$pred4x4_{L'}[0,1] = (p[-1,1] + p[-1,2] + 1) >> 1$$

$$pred4x4_{L'}[0,2] = (p[-1,2] + p[-1,3] + 1) >> 1$$

$$pred4x4_{L'}[0,3] = p[-1,3]$$

$$pred4x4_{L'}[1,0] = (p[0,0] + p[0,1] + 1) >> 1$$

$$pred4x4_{L'}[1,1] = (p[0,1] + p[0,2] + 1) >> 1$$

$$pred4x4_{L'}[1,2] = (p[0,2] + p[0,3] + 1) >> 1$$

$$pred4x4_{L'}[1,3] = p[0,3]$$

$$pred4x4_{L'}[2,0] = (p[1,0] + p[1,1] + 1) >> 1$$

$$pred4x4_{L'}[2,1] = (p[1,1] + p[1,2] + 1) >> 1$$

$$pred4x4_{L'}[2,2] = (p[1,2] + p[1,3] + 1) >> 1$$

$$pred4x4_{L'}[2,3] = p[1,3]$$

$$pred4x4_{L'}[3,0] = (p[2,0] + p[2,1] + 1) >> 1$$

$$pred4x4_{L'}[3,1] = (p[2,1] + p[2,2] + 1) >> 1$$

$$pred4x4_{L'}[3,2] = (p[2,2] + p[2,3] + 1) >> 1$$

$$pred4x4_{L'}[3,3] = p[2,3]$$

Finally, in DC mode (mode 2), all pixels in the block 300 to be predicted are predicted from (A+B+C+D+I+J+K+L+4)/8 which is formed using pixel values of blocks adjacent to the block 300.

So far, prediction of luminance block and G block pixels with a 4 x 4 block size has been described as examples. However, when the size of a luminance block is 8 x 8 or 16 x 16, the luminance pixel prediction method described above can also be applied in the same manner. For example, when the mode for an 8 x 8 block is Vertical mode, as described with reference to FIG. 3A, each pixel is predicted from a nearest adjacent pixel in the vertical direction. Accordingly, the only difference is that the size of the block is 8 x 8 or 16 x 16, and except that, the pixel prediction is the same as in Vertical mode for a 4 x 4 block.

Meanwhile, in addition to pixels formed with luminance and chrominance, for a red (R) block and a blue (B) block among R, green (G), and B blocks, the pixel prediction method for a chrominance pixel described below can be applied.

Next, calculation of pixels for a chrominance block, an R block, and B block will now be explained in detail with reference to FIGS. 4A through 4C.

Prediction of pixels of a chrominance block, an R block, and a B block is performed in units of 8 x 8 blocks, and there are 4 prediction modes, but in the present invention, plane mode is not used. Accordingly, in the present invention, only DC mode (mode 0), Horizontal mode (mode 1) and Vertical mode (mode 2) are used.

FIG. 4A illustrates pixel prediction of a chrominance block, an R block, and a B block in DC mode.

FIGS. 4A through 4C illustrate prediction for an 8 x 8 block, but the pixel prediction can be applied to an M x N block in the same manner when prediction of pixels in a chrominance block, an R block, and a B block is performed.

Referring to FIG. 4A, a1, b1, c1, d1, e1, f1, g1, h1, i1, j1, k1, l1, m1, n1, o1, and p1 which are all pixels in a 4 x 4 block 410 of an 8 x 8 block 400 are predicted from (A + B + C + D + I + J + K + L + 4)/8. Also, pixels a2, b2, c2, d2, e2, f2, g2, h2, i2, j2, k2, l2, m2, n2, o2, and p2 are predicted from (E + F + G + H + 2)/4. Also, pixels a3, b3, c3, d3, e3, f3, g3, h3, i3, j3, k3, l3, m3, n3, o3, and p3 are predicted from (M + N + O + P + 2)/4 and pixels a4, b4, c4, d4, e4, f4, g4, h4, i4, j4, k4, l4, m4, n4, o4, and p4 are predicted from (E + F + G + H + M + N + O + P + 4)/8.

FIG. 4B illustrates pixel prediction of a chrominance block, an R block, and a B block in Horizontal mode.

Pixel a1 is predicted from pixel I, pixel b1 from pixel a1, and pixel c1 from pixel b1. Thus, prediction is performed by using an adjacent pixel in the horizontal direction in the block 400 to be predicted.

FIG. 4C illustrates pixel prediction of a chrominance block, an R block, and a B block in Vertical mode.

Pixel a1 is predicted from pixel A, pixel e1 from pixel a1, and pixel i1 from pixel e1. Thus, prediction is performed by using an adjacent pixel in the vertical direction in the block 400 to be predicted.

It is described above that pixel prediction is performed by using adjacent pixels in each of 4 x 4 block units in luminance block and G block prediction and is performed by using adjacent pixels in each of 8 x 8 block units in chrominance block, R block, and B block prediction. However, the prediction method is not limited to the 4 x 4 block or 8 x 8 block, and can be equally applied to blocks of an arbitrary size M x N. That is, even when a block unit to be predicted is an M x N block, a pixel value to be predicted can be calculated by using a pixel closest to the pixel value in a prediction direction in the block.

FIG. 5 illustrates a prediction method when encoding and decoding are performed in the above modes.

Referring to FIG. 5, another method for obtaining a residual by pixel prediction will now be explained. In the conventional encoder, in order to obtain a residual value, a p ixel in an adjacent block is used. For example, in Vertical_mode of FIG. 3A, in the conventional method, pixels a 302, e 304, i 306, and m 308 are predicted all from pixel A, and therefore, residual values are $r_0$ = a-A, $r_1$ = e-A, $r_2$ = i-A, and $r_3$ = m-A. In the present invention, by using thus obtained conventional residual values, new residual values are calculated. Then, the new residual values are $r'_0 = r_0$, $r'_1 = r_1 - r_0$, $r'_2 = r_2 - r_1$, and $r'_3 = r_3 - r_2$. At this time, since the new residual values $r'_0$, $r'_1$, $r'_2$, and $r'_3$ are $r'_0$ = a-A, $r'_1$ = e-a, $r'_2$ = i-e, and $r'_3$ = m-i, $r'_0$, $r'_1$ , $r'_2$, and $r'_3$ have the same values as the residual values predicted from the nearest adjacent pixels according to the prediction method described above. Accordingly, with the new residual values $r'_0$, $r'_1$, $r'_2$, and $r'_3$ , in each mode as described above, the pixel prediction method using an adjacent pixel can be applied.

Accordingly, the motion prediction unit 110 of the encoding apparatus of the present invention of FIG. 1 can further include a residual value calculation unit generating new pixel values $r'_0$, $r'_1$, $r'_2$, and $r'_3$ from residuals.

FIG. 6 is a block diagram of a decoding apparatus according to an exemplary embodiment of the present invention.

An entropy decoder 610 receives a bitstream encoded according to the present invention, and performs decoding according to an entropy decoding method such as CAVLC or CABAC. In the frontmost part of the received bitstream, a flag indicating that pixel values are predicted according to the present invention can be set. As an example of this flag, there is a lossless_qpprime_y_zero_flag in H.264.

By using this flag, information that pixel values are predicted according to the present invention is transferred to a moving picture reconstruction unit 620.

According to this flag information and encoding mode information, the moving picture reconstruction unit 620 restores moving pictures according to the pixel prediction calculation method in a mode of the present invention, and outputs the result.

FIG. 7 is a flowchart of an encoding method according to the present invention.

As described above, motion prediction is performed in a variety of intra prediction modes provided according to modified prediction methods, and an optimum mode is determined in operation S710. Also, without using the modified prediction methods, a block is formed by using residual values newly generated from residuals obtained by the conventional prediction method, and then, motion prediction under the intra prediction encoding mode can be performed. The optimum mode can be performed by RD optimization, and because lossless is encoding is used in the present invention, one encoding mode is determined by rate optimization. In the determined encoding mode, motion prediction is performed in operation S720. Then, the resulting value is entropy coded and output in operation S730.

Decoding is performed in the reverse of the order of the encoding. That is, the entropy coded bitstream is input, and entropy decoded. Then, based on encoding mode information and flag information, pixel values are restored according to the pixel prediction value calculation method of the present invention, and moving pictures are output.

At this time, the pixel values restored can be expressed as the following equations:

(1) If, when encoding is performed, the modified prediction method as described above is used and the encoding mode is determined as Vertical mode, pixel values are restored according to the following equation:

$$u_{ij} = pred_L[x_{O+j}, y_{O+i}] + \sum_{k=0}^{i} r_{i-k,j} \qquad i,j = 0,..,3$$

or

$$u_{ij} = pred_{L'}[x_{O+j}, y_O] + \sum_{k=0}^{i} r_{i-k,j} \qquad i,j = 0,..,3$$

(2) If, when encoding is performed, the modified prediction method as described above is used and the encoding mode is determined as Horizontal mode, pixel values are restored according to the following equation:

$$u_{ij} = pred_L[x_{O+j}, y_{O+i}] + \sum_{k=0}^{j} r_{i,j-k} \qquad i,j = 0,..,3$$

or

$$u_{ij} = pred_{L'}[x_O, y_{O+i}] + \sum_{k=0}^{j} r_{i,j-k} \quad i,j = 0,..,3$$

(3) If, when encoding is performed, the modified prediction method as described above is used and the encoding mode is determined as Diagonal_Down_Left mode, pixel values are restored according to the following equation:

If $i = 0$ ( $(i,j) = (0,0), (0,1), (0,2), (0,3)$ ),

$$u_{ij} = pred_{L'}[x_{O+j}, y_{O+i}] + r_{i,j},$$

if $i = 1, j < 3$ ( $(i,j) = (1,0), (1,1), (1,2)$ ),

$$u_{ij} = pred_{L'}[x_{O+j+1}, y_{O+i-1}] + r_{i-1,j+1} + r_{i,j},$$

if $i = 1, j = 3$ ( $(i,j) = (1,3)$ ),

$$u_{ij} = pred_{L'}[x_{O+j}, y_{O+i-1}] + r_{i-1,j} + r_{i,j},$$

if $i = 2, j < 2$ ( $(i,j) = (2,0), (2,1)$ ),

$$u_{ij} = pred_{L'}[x_{O+j+2}, y_{O+i-2}] + r_{i-2,j+2} + r_{i-1,j+1} + r_{i,j},$$

if $i = 2, j = 2$ ( $(i,j) = (2,2)$ ),

$$u_{ij} = pred_{L'}[x_{O+j+1}, y_{O+i-2}] + r_{i-2,j+1} + r_{i-1,j-1} + r_{i,j},$$

if

$$i = 2,\ j = 3\ ((i,j) = (2,3)\ ),$$

$$u_{ij} = pred_{L'}[x_{O+j},\ y_{O+i-2}] + r_{i-2,j} + r_{i-1,j} + r_{i,j}\ ,$$

$$\text{if } i = 3,\ j = 0\ ((i,j) = (3,0)\ ),$$

$$u_{ij} = pred_{L'}[x_{O+j+3},\ y_{O+i-3}] + r_{i-3,j+3} + r_{i-2,j+2} + r_{i-1,j+1} + r_{i,j}\ ,$$

$$\text{if } i = 3,\ j = 1\ ((i,j) = (3,1)\ ),$$

$$u_{ij} = pred_{L'}[x_{O+j+2},\ y_{O+i-3}] + r_{i-3,j+2} + r_{i-2,j+2} + r_{i-1,j+1} + r_{i,j}\ ,$$

$$\text{if } i = 3,\ j = 2\ ((i,j) = (3,2)\ ),$$

$$u_{ij} = pred_{L'}[x_{O+j+1},\ y_{O+i-3}] + r_{i-3,j+1} + r_{i-2,j+1} + r_{i-1,j+1} + r_{i,j}\ ,$$

$$\text{if } i = 3,\ j = 3\ ((i,j) = (3,3)\ ),$$

$$u_{ij} = pred_{L'}[x_{O+j},\ y_{O+i-3}] + r_{i-3,j} + r_{i-2,j} + r_{i-1,j} + r_{i,j}\ .$$

(4) If, when encoding is performed, the modified prediction method as described above is used and the encoding mode is determined as Diagonal_Down_Right mode, pixel values are restored according to the following equation:

$$\text{If } i = 0, \text{or } j = 0\ (\ (i,j) = (0,0),\ (0,1),\ (0,2),\ (0,3),\ (1,0),\ (2,0),\ (3,0)\ ),$$

$$u_{ij} = pred_{L'}[x_{O+j},\ y_{O+i}] + r_{i,j}\ ,$$

$$\text{if } i = 1,\ j >= 1, \text{or } j = 1,\ i > 1\ ((i,j) = (1,1),\ (1,2),\ (1,3),\ (2,1),\ (3,1)\ ),$$

$$u_{ij} = pred_{L'}[x_{O+j},\ y_{O+i}] + r_{i-1,j-1} + r_{i,j}\ ,$$

$$\text{if } i = 2,\ j >= 2, \text{or } j = 2,\ i > 2\ ((i,j) = (2,2),\ (2,3),\ (3,2)\ ),$$

$$u_{ij} = pred_{L'}[x_{O+j},\ y_{O+i}] + r_{i-2,j-2} + r_{i-1,j-1} + r_{i,j}\ ,$$

$$\text{if } i = j = 3\ ((i,j) = (3,3)\ ),$$

$$u_{ij} = pred_{L'}[x_{O+j},\ y_{O+i}] + r_{i-3,j-3} + r_{i-2,j-2} + r_{i-1,j-1} + r_{i,j}\ .$$

(5) In the remaining modes, pixel values are restored by the following equation:

$$u_{ij} = pred_L[x_{O+j}, y_{O+i}] + r_{ij}$$

As the result of experiments performed according to the method described above, for various test images suggested by Joint Model 73 (JM73), which is an H.264 standardization group, the following compression efficiency improvement has been achieved. Experiment conditions are shown in Table 1 as follows:

Table 1

| | News (QCIF) | Container (QCIF) | Foreman (QCIF) | Silent (QCIF) | Paris (CIF) | Mobile (CIF) | Tempete (CIF) |
|---|---|---|---|---|---|---|---|
| Entire frame | 100 (10 Hz) | 100 (10 Hz) | 100 (10 Hz) | 150 (15 Hz) | 150 (15 Hz) | 300 (30 Hz) | 260 (30 Hz) |
| Condition | Rate Optimization, CABAC or CAVLC, Intra 4 x 4 Mode | | | | | | |

For all seven test images, moving pictures of 10 Hz, 15 Hz, and 30 Hz were experimented in various ways with 100 frames to 300 frames. Compression ratios when test images were compressed by the conventional compression method and by the compression method of the present invention (PI), respectively, under the experiment conditions as shown in table 1 are compared in Table 2 as follows:

Table 2

| Image | Original Size (Bits) | Method | CABAC | | | CAVLC | | |
|---|---|---|---|---|---|---|---|---|
| | | | Total Bits | Compression | Relative Bits (%) | Total Bits | Compression | Relative Bits (%) |
| News (300 Frames) | 91238400 | JM73 | 49062832 | 1.8596 | 100 | 52730184 | 1.7303 | 100 |
| | | PI | 41909016 | 2.1771 | 85.4191 | 45048912 | 2.0253 | 85.4329 |
| Container (300 Frames) | 91238400 | JM73 | 47836576 | 1.9073 | 100 | 51976808 | 1.7554 | 100 |
| | | PI | 42214496 | 2.1613 | 88.2473 | 45796656 | 1.9923 | 88.1098 |
| Foreman (300 Frames) | 91238400 | JM73 | 50418312 | 1.8096 | 100 | 54997344 | 1.6590 | 100 |
| | | PI | 45126584 | 2.0218 | 89.5044 | 48981272 | 1.8627 | 89.0612 |
| Silent (300 Frames) | 91238400 | JM73 | 54273064 | 1.6811 | 100 | 59704832 | 1.5282 | 100 |
| | | PI | 47761392 | 1.9103 | 88.0020 | 51595640 | 1.7683 | 86.4179 |
| Paris (300 Frames) | 364953600 | JM73 | 224766912 | 1.6237 | 100 | 243763312 | 1.4972 | 100 |
| | | PI | 194010352 | 1.8811 | 86.3162 | 209244560 | 1.7441 | 85.8392 |
| Mobile (300 Frames) | 364953600 | JM73 | 285423632 | 1.2786 | 100 | 310319680 | 1.1761 | 100 |
| | | PI | 257143688 | 14193 | 90.0919 | 276517280 | 1.3198 | 89.1072 |
| Tempete (260 Frames) | 316293120 | JM73 | 205817192 | 1.5368 | 100 | 225291464 | 1.4039 | 100 |
| | | PI | 183106968 | 1.7274 | 88.9658 | 198472424 | 1.5936 | 88.0959 |
| Average | | JM73 | 131085503 | 1.6710 | 100 | 142683375 | 1.5357 | 100 |
| | | PI | 115896071 | 1.8997 | 88.0781 | 125093821 | 1.7580 | 87.4377 |

Meanwhile, Table 2 shows results when test images were generated as intra frames, by using only intra prediction, and, it can be seen that the compression ratio when only intra prediction was used is higher.

Meanwhile, the moving picture encoding and decoding method described above can be implemented as a computer program. The codes and code segments forming the program can be easily inferred by computer programmers in the field of the present invention. Also, the program can be stored in a computer readable medium and read and executed by a computer such that the moving picture encoding and decoding method is performed. The information storage medium may be a magnetic recording medium, an optical recording medium, or carrier waves.

While the present invention has been particularly shown and described with reference to exemplary embodiments thereof, it will be understood by those of ordinary skill in the art that various changes in form and details may be made therein. The exemplary embodiments should be considered in descriptive sense only and not for purposes of limitation. Therefore, the scope of the invention is defined not by the forgoing detailed description but by the appended claims.

According to the present invention as described above, the compression ratio can be improved when lossless encoding is performed. In particular, when only intra prediction mode is used, the compression ratio is much higher than in the conventional method.

**Industrial Applicability**

The present invention can be applied to a lossless moving picture encoder and decorder in order to increase the compression ratio.

**Claims**

1. A method for decoding a video signal, comprising:

    extracting, by entropy-decoding a entropy-coded bitstream, residual data for a current block that includes a current pixel and an adjacent pixel of the current pixel, flag information, and encoding mode information, wherein the residual data includes a residual value for the current pixel and a residual value for the adjacent pixel, the flag information indicates recalculation of the residual value of the current pixel based on the residual value of the adjacent pixel, and the encoding mode information indicates an intra prediction direction;
    when the flag information indicates recalculation of the residual value of the current pixel, recalculating a new residual value for the current pixel based on the extracted residual value for the current pixel and the residual value for the adjacent pixel, wherein the adjacent pixel is closest to the current pixel in the intra prediction direction;
    obtaining a prediction value of the current pixel according to the intra prediction direction; and,
    losslessly restoring the current pixel by using the recalculated residual value for the current pixel and the prediction value of the current pixel.

2. The method of claim 1, wherein if the current block is a luminance block or a G block, the current block is one of a 4 x 4 block, an 8 x 8 block, and a 16 x 16 block, and if the current block is one of a chrominance block, an R block, and a B block, the current block is an 8 x 8 block.

3. An apparatus for decoding a video signal, comprising:

    an entropy decoder configured to extract residual data for a current block including a current pixel and an adjacent pixel of the current pixel, flag information, and encoding mode information by entropy-decoding a entropy-coded bitstream, wherein the residual data includes a residual value for the current pixel and a residual value for the adjacent pixel, the flag information indicates recalculation of the residual value of the current pixel based on the residual value of the adjacent pixel, and the encoding mode information indicates an intra prediction direction; and
    an image restoring unit configured to:

        recalculate a new residual value for the current pixel based on the extracted residual value for the current pixel and the residual value for the adjacent pixel, when the flag information indicates recalculation of the residual value of the current pixel, wherein the adjacent pixel is closest to the current pixel in the intra prediction direction,
        obtain a prediction value of the current pixel according to the intra prediction direction, and
        losslessly restore the current pixel by using the recalculated residual value for the current pixel and the prediction value of the current pixel.

4. The apparatus of claim 3, wherein if the current block is a luminance block or a G block, the current block is one of a 4 x 4 block, an 8 x 8 block, and a 16 x 16 block, and if the current block is one of a chrominance block, an R block, and a B block, the current block is an 8 x 8 block.

**Patentansprüche**

1. Verfahren zum Decodieren eines Videosignals, das Folgendes umfasst:

   Extrahieren, durch Entropiedecodieren eines entropiecodierten Bitstroms, von Restdaten für einen aktuellen Block, der ein aktuelles Pixel und ein angrenzendes Pixel des aktuellen Pixels, Flag-Informationen und Codiermodusinformationen beinhaltet, wobei die Restdaten einen Restwert für das aktuelle Pixel und einen Restwert für das angrenzende Pixel beinhalten, die Flag-Informationen Neuberechnung des Restwerts des aktuellen Pixels auf der Grundlage des Restwerts des angrenzenden Pixels angeben und die Codiermodusinformationen eine Intraprädiktionsrichtung angeben;
   wenn die Flag-Informationen Neuberechnung des Restwerts des aktuellen Pixels angeben, Neuberechnen eines neuen Restwerts für das aktuelle Pixel auf der Grundlage des extrahierten Restwerts für das aktuelle Pixel und des Restwerts für das angrenzende Pixel, wobei das angrenzende Pixel dem aktuellen Pixel in der Intraprädiktionsrichtung am nächsten liegt;
   Erhalten eines Prädiktionswerts des aktuellen Pixels gemäß der Intraprädiktionsrichtung;
   und
   verlustfreies Wiederherstellen des aktuellen Pixels unter Verwendung des neuberechneten Restwerts für das aktuelle Pixel und des Prädiktionswerts des aktuellen Pixels.

2. Verfahren nach Anspruch 1, wobei, falls der aktuelle Block ein Luminanzblock oder ein G-Block ist, der aktuelle Block ein 4 x 4-Block oder ein 8 x 8-Block oder ein 16 x 16-Block ist, und, falls der aktuelle Block ein Chrominanzblock oder ein R-Block oder ein B-Block ist, der aktuelle Block ein 8 x 8-Block ist.

3. Vorrichtung zum Decodieren eines Videosignals, die Folgendes umfasst:

   einen Entropiedecoder, ausgelegt zum Extrahieren von Restdaten für einen aktuellen Block, der ein aktuelles Pixel und ein angrenzendes Pixel des aktuellen Pixels, Flag-Informationen und Codiermodusinformationen beinhaltet, durch Entropiedecodieren eines entropiecodierten Bitstroms, wobei die Restdaten einen Restwert für das aktuelle Pixel und einen Restwert für das angrenzende Pixel beinhalten, die Flag-Informationen Neuberechnung des Restwerts des aktuellen Pixels auf der Grundlage des Restwerts des angrenzenden Pixels angeben und die Codiermodusinformationen eine Intraprädiktionsrichtung angeben; und
   eine Bildwiederherstellungseinheit, die ausgelegt ist zum:

      Neuberechnen eines neuen Restwerts für das aktuelle Pixel auf der Grundlage des extrahierten Restwerts für das aktuelle Pixel und des Restwerts für das angrenzende Pixel, wenn die Flag-Informationen Neuberechnung des Restwerts des aktuellen Pixels angeben, wobei das angrenzende Pixel dem aktuellen Pixel in der Intraprädiktionsrichtung am nächsten liegt;
      Erhalten eines Prädiktionswerts des aktuellen Pixels gemäß der Intraprädiktionsrichtung; und
      verlustfreies Wiederherstellen des aktuellen Pixels unter Verwendung des neuberechneten Restwerts für das aktuelle Pixel und des Prädiktionswerts des aktuellen Pixels.

4. Vorrichtung nach Anspruch 3, wobei, falls der aktuelle Block ein Luminanzblock oder ein G-Block ist, der aktuelle Block ein 4 x 4-Block oder ein 8 x 8-Block oder ein 16 x 16-Block ist, und, falls der aktuelle Block ein Chrominanzblock oder ein R-Block oder ein B-Block ist, der aktuelle Block ein 8 x 8-Block ist.

**Revendications**

1. Procédé de décodage d'un signal vidéo, comprenant :

   l'extraction, par décodage entropique d'un flux binaire codé par entropie, de données résiduelles pour un bloc courant qui comprend un pixel courant et un pixel adjacent au pixel courant, des informations de drapeau, et des informations de mode de codage, les données résiduelles comprenant une valeur résiduelle pour le pixel courant et une valeur résiduelle pour le pixel adjacent, les informations de drapeau indiquant un recalcul de la valeur résiduelle du pixel courant sur la base de la valeur résiduelle du pixel adjacent, et les informations de mode de codage indiquant : une direction de prédiction intra ;
lorsque les informations de drapeau indiquent un recalcul de la valeur résiduelle du pixel courant, le recalcul d'une nouvelle valeur résiduelle pour le pixel courant sur la base de la valeur résiduelle extraite pour le pixel courant et de la valeur résiduelle pour le pixel adjacent, le pixel adjacent étant le plus proche du pixel courant dans la direction de prédiction intra ;
l'obtention d'une valeur de prédiction du pixel courant en fonction de la direction de prédiction intra ; et, le rétablissement sans perte du pixel courant en utilisant la valeur résiduelle recalculée pour le pixel courant et la valeur de prédiction du pixel courant.

**2.** Procédé selon la revendication 1, si le bloc courant est un bloc de luminance ou un bloc G, le bloc courant étant l'un d'un bloc $4 \times 4$, d'un bloc $8 \times 8$ et d'un bloc $16 \times 16$, et si le bloc courant est l'un d'un bloc de chrominance, d'un bloc R et d'un bloc B, le bloc courant étant un bloc $8 \times 8$.

**3.** Appareil pour décoder un signal vidéo, comprenant :

un décodeur entropique configuré pour extraire des données résiduelles pour un bloc courant comprenant un pixel courant et un pixel adjacent du pixel courant, des informations de drapeau, et un mode de codage des informations par décodage entropique d'un flux binaire codé par entropie, les données résiduelles comprenant une valeur résiduelle pour le pixel courant et une valeur résiduelle pour le pixel adjacent, les informations de drapeau indiquant un recalcul de la valeur résiduelle du pixel courant sur la base de la valeur résiduelle du pixel adjacent, et les informations de mode de codage indiquant une direction de prédiction intra ; et
une unité de rétablissement d'images configurée pour :

recalculer une nouvelle valeur résiduelle pour le pixel courant sur la base de la valeur résiduelle extraite pour le pixel courant et de la valeur résiduelle pour le pixel adjacent, lorsque les informations de drapeau indique un recalcul de la valeur résiduelle du pixel courant, le pixel adjacent étant le plus proche du pixel courant dans la direction de prédiction intra,
obtenir une valeur de prédiction du pixel courant en fonction de la direction de prédiction intra, et
rétablir sans perte le pixel courant en utilisant la valeur résiduelle recalculée pour le pixel courant et la valeur de prédiction du pixel courant.

**4.** Appareil selon la revendication 3, si le bloc courant est un bloc de luminance ou un bloc G, le bloc courant étant l'un d'un bloc $4 \times 4$, d'un bloc $8 \times 8$ et d'un bloc $16 \times 16$, et si le bloc courant est l'un d'un bloc de chrominance, d'un bloc R et d'un bloc B, le bloc courant étant un bloc $8 \times 8$.

FIG. 1

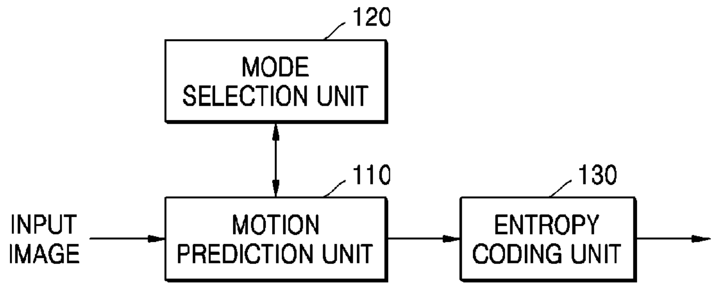
120
MODE
SELECTION UNIT
110
130
INPUT
IMAGE
MOTION
PREDICTION UNIT
ENTROPY
CODING UNIT

FIG. 2

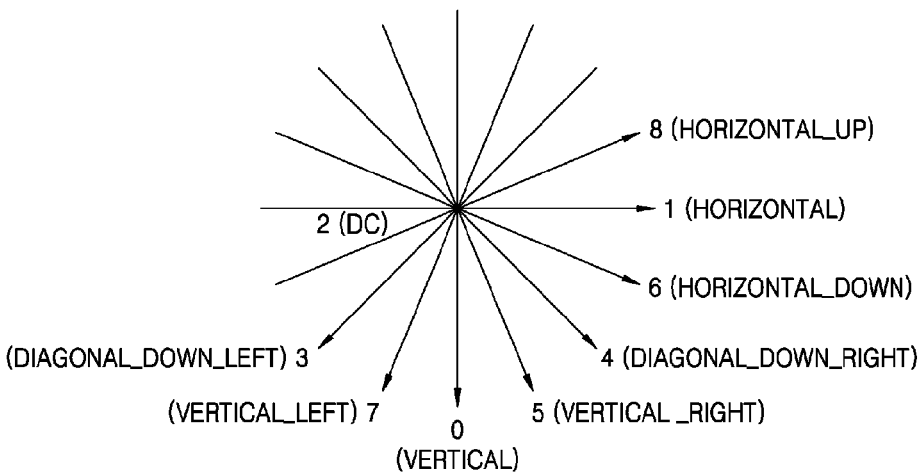
8 (HORIZONTAL_UP)
1 (HORIZONTAL)
2 (DC)
6 (HORIZONTAL_DOWN)
(DIAGONAL_DOWN_LEFT) 3
4 (DIAGONAL_DOWN_RIGHT)
(VERTICAL_LEFT) 7
5 (VERTICAL _RIGHT)
0
(VERTICAL)

FIG. 3A

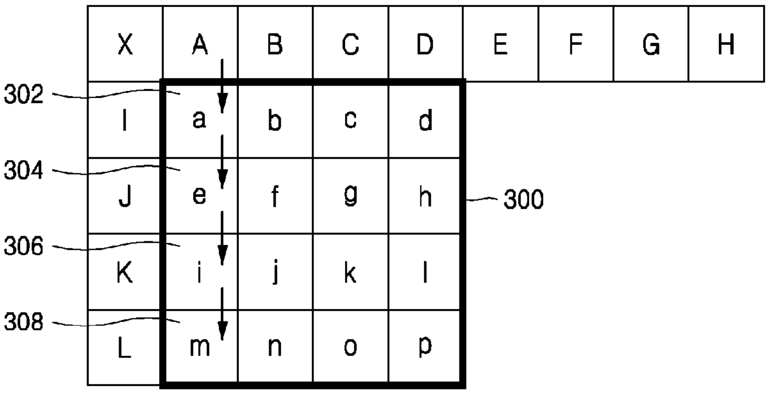
X
A
B
C
D
E
F
G
H
302
304
306
308
I
a
b
c
d
J
e
f
g
h
300
K
i
j
k
l
L
m
n
o
p

FIG. 3B

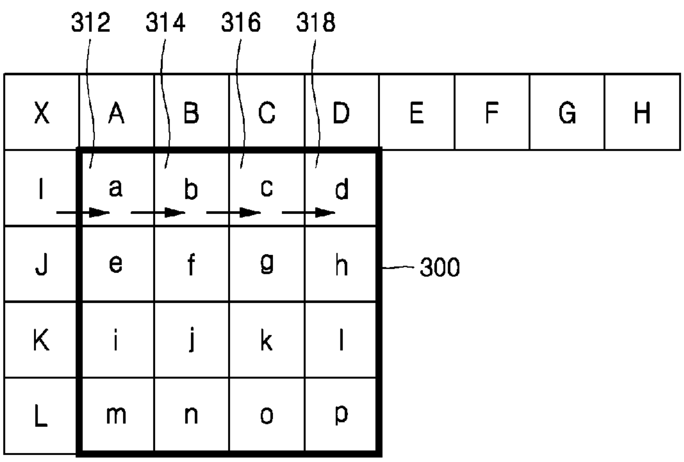
312
314
316
318
X
A
B
C
D
E
F
G
H
I
a
b
c
d
J
e
f
g
h
300
K
i
j
k
l
L
m
n
o
p

FIG. 3C

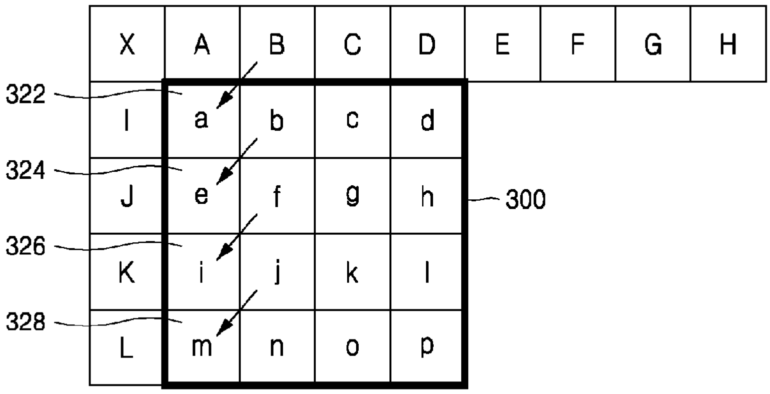
X
A
B
C
D
E
F
G
H
322
I
a
b
c
d
324
J
e
f
g
h
300
326
K
i
j
k
l
328
L
m
n
o
p

FIG. 3D

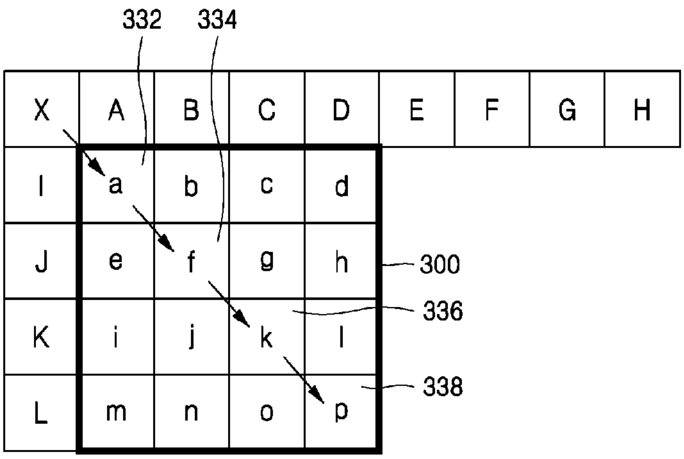
332
334
X
A
B
C
D
E
F
G
H
I
a
b
c
d
J
e
f
g
h
300
336
K
i
j
k
l
338
L
m
n
o
p

FIG. 3E

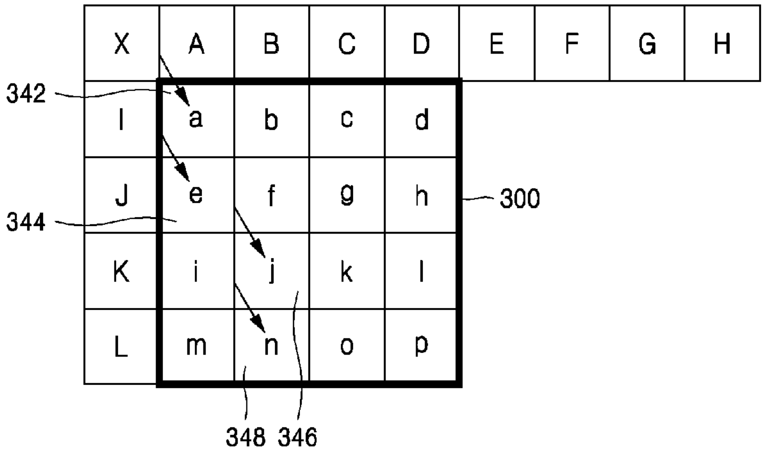
X
A
B
C
D
E
F
G
H
I
J
K
L
a
b
c
d
e
f
g
h
i
j
k
l
m
n
o
p
342
344
300
348
346

FIG. 3F

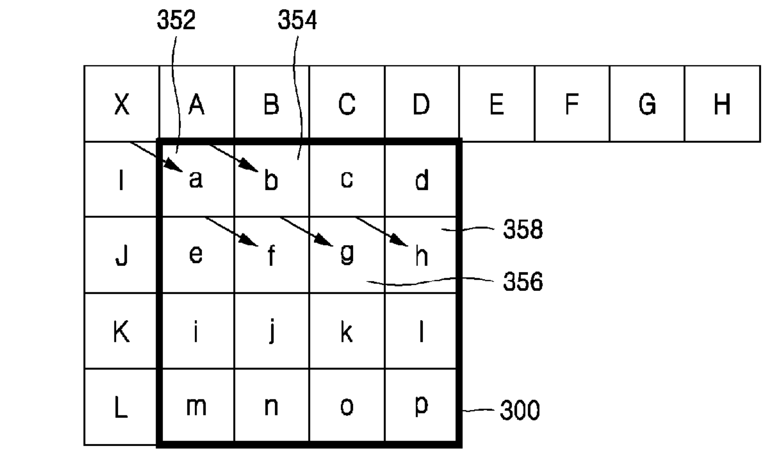
352
354
X
A
B
C
D
E
F
G
H
I
J
K
L
a
b
c
d
e
f
g
h
i
j
k
l
m
n
o
p
358
356
300

FIG. 3G

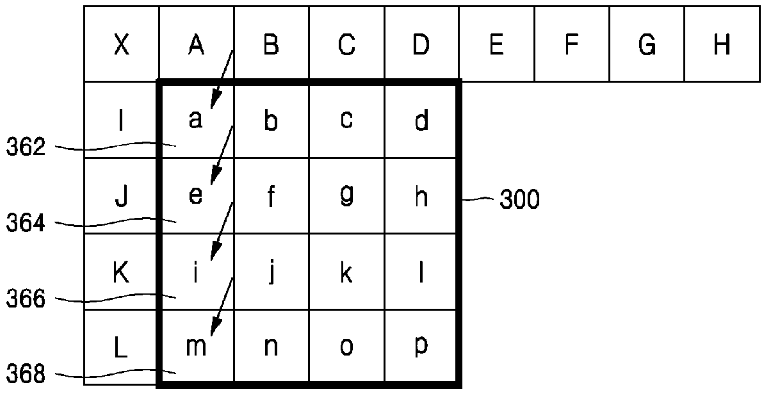
X
A
B
C
D
E
F
G
H
I
a
b
c
d
J
e
f
g
h
K
i
j
k
l
L
m
n
o
p
362
364
366
368
300

FIG. 3H

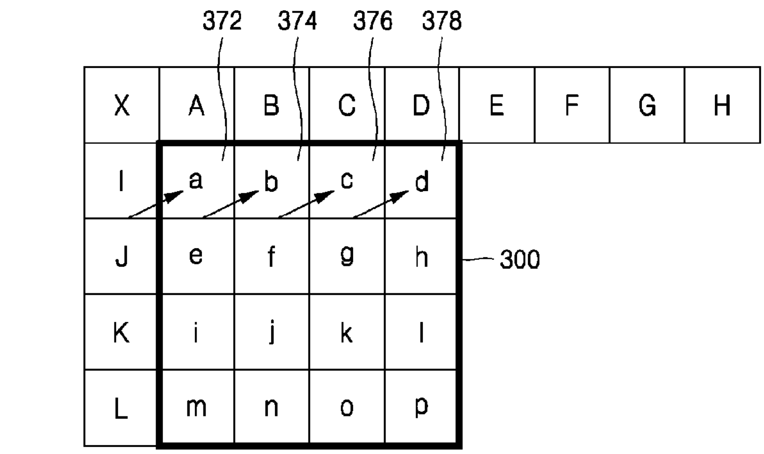
372
374
376
378
X
A
B
C
D
E
F
G
H
I
a
b
c
d
J
e
f
g
h
K
i
j
k
l
L
m
n
o
p
300

FIG. 4A

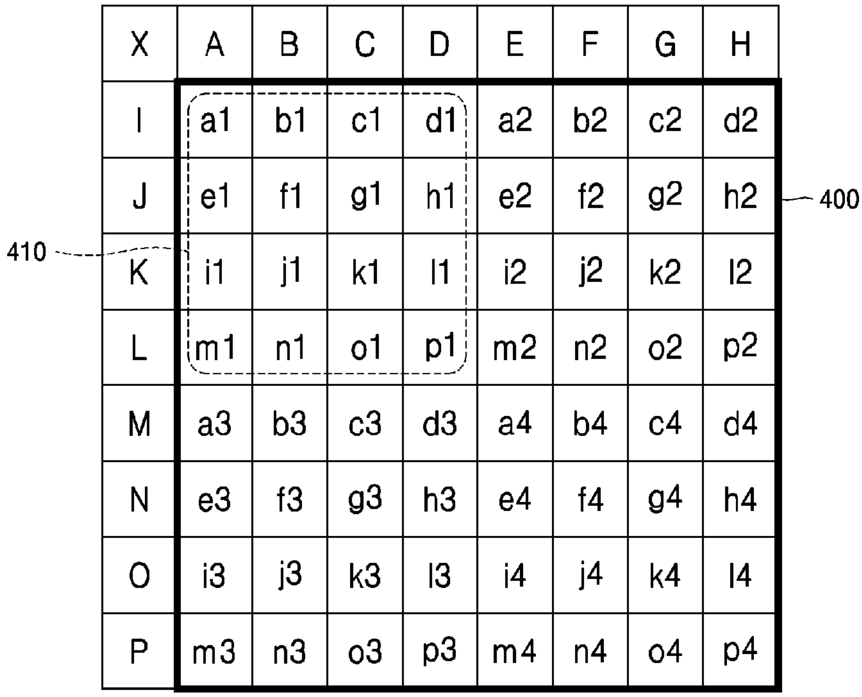
X A B C D E F G H
I a1 b1 c1 d1 a2 b2 c2 d2
J e1 f1 g1 h1 e2 f2 g2 h2
K i1 j1 k1 l1 i2 j2 k2 l2
L m1 n1 o1 p1 m2 n2 o2 p2
M a3 b3 c3 d3 a4 b4 c4 d4
N e3 f3 g3 h3 e4 f4 g4 h4
O i3 j3 k3 l3 i4 j4 k4 l4
P m3 n3 o3 p3 m4 n4 o4 p4
400
410

FIG. 4B

| X | A | B | C | D | E | F | G | H |
|---|---|---|---|---|---|---|---|---|
| I | a1 | b1 | c1 | d1 | a2 | b2 | c2 | d2 |
| J | e1 | f1 | g1 | h1 | e2 | f2 | g2 | h2 |
| K | i1 | j1 | k1 | l1 | i2 | j2 | k2 | l2 |
| L | m1 | n1 | o1 | p1 | m2 | n2 | o2 | p2 |
| M | a3 | b3 | c3 | d3 | a4 | b4 | c4 | d4 |
| N | e3 | f3 | g3 | h3 | e4 | f4 | g4 | h4 |
| O | i3 | j3 | k3 | l3 | i4 | j4 | k4 | l4 |
| P | m3 | n3 | o3 | p3 | m4 | n4 | o4 | p4 |

400

FIG. 4C

| X | A | B | C | D | E | F | G | H |
|---|---|---|---|---|---|---|---|---|
| I | a1 | b1 | c1 | d1 | a2 | b2 | c2 | d2 |
| J | e1 | f1 | g1 | h1 | e2 | f2 | g2 | h2 |
| K | i1 | j1 | k1 | l1 | i2 | j2 | k2 | l2 |
| L | m1 | n1 | o1 | p1 | m2 | n2 | o2 | p2 |
| M | a3 | b3 | c3 | d3 | a4 | b4 | c4 | d4 |
| N | e3 | f3 | g3 | h3 | e4 | f4 | g4 | h4 |
| O | i3 | j3 | k3 | l3 | i4 | j4 | k4 | l4 |
| P | m3 | n3 | o3 | p3 | m4 | n4 | o4 | p4 |

400

FIG. 5

| | | | |
|---|---|---|---|
| $r_{00}$ | $r_{01}$ | $r_{02}$ | $r_{03}$ |
| $r_{10}$ | $r_{11}$ | $r_{12}$ | $r_{13}$ |
| $r_{20}$ | $r_{21}$ | $r_{22}$ | $r_{23}$ |
| $r_{30}$ | $r_{31}$ | $r_{32}$ | $r_{33}$ |

FIG. 6

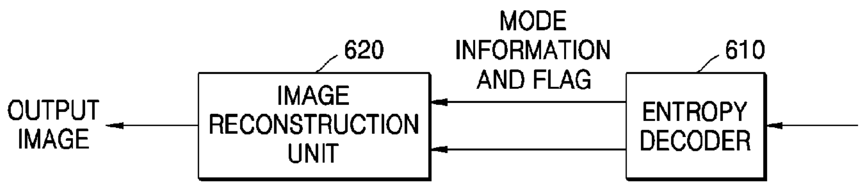
MODE
INFORMATION
AND FLAG
620
610
OUTPUT
IMAGE
IMAGE
RECONSTRUCTION
UNIT
ENTROPY
DECODER

FIG. 7

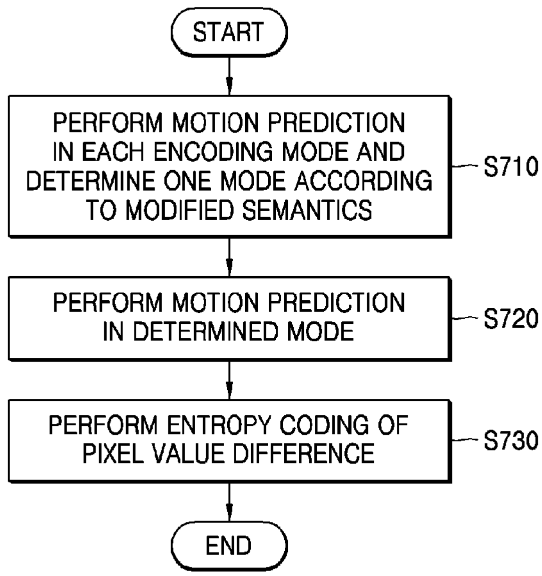
START
PERFORM MOTION PREDICTION
IN EACH ENCODING MODE AND
DETERMINE ONE MODE ACCORDING
TO MODIFIED SEMANTICS
S710
PERFORM MOTION PREDICTION
IN DETERMINED MODE
S720
PERFORM ENTROPY CODING OF
PIXEL VALUE DIFFERENCE
S730
END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **SUN.** Lossless Coding and QP Range Selection. *3. JVT MEETING; 60. MPEG MEETING,* 10 May 2002
- A simple block-based lossless image compression scheme. **CHANG S G et al.** CONFERENCE RECORD OF THE THIRTIETH ASILOMAR CONFERENCE ON SIGNALS, SYSTEMS AND COMPUTERS. IEEE COMPUT. SOC, 03 November 1996, vol. 1, 591-595